# FASCICULE DE BREVET EUROPEEN

(11) **EP 1 216 607 B1**
(45) Date de publication et mention de la délivrance du brevet: **30.03.2005**
(21) Numéro de dépôt: 01440411.5
(22) Date de dépôt: 04.12.2001
(51) Int. Cl.: A01B 33/14

(54) **Outil pour machine de travail du sol**
Gerät für Bodenbearbeitungsmaschine
Tool for soil working machine

(30) Priorité: 18.12.2000 FR 0017107
(43) Date de publication de la demande: 26.06.2002
(73) Titulaire: KUHN S.A., 67706 Saverne Cedex (FR)
(72) Inventeur: Kirch, Michel, 67260 Keskastel (FR)

(56) Documents cités:
- EP-A- 0 304 120
- EP-A- 0 891 687
- FR-A- 2 531 600
- GB-A- 2 106 762
- GB-A- 2 149 632

## Description

La présente invention se rapporte à un outil, pour une machine de travail du sol, destiné à tourner autour d'un axe vertical et comportant :
- une partie active destinée à travailler le sol,
- une partie de liaison, dont un plan d'extension est sensiblement orthogonal à un plan d'extension de ladite partie active, destinée à positionner ledit outil sur ladite machine en s'engageant dans au moins un logement prévu à cet effet,
- ladite partie de liaison présentant suivant une section transversale une première zone sensiblement rectangulaire et au moins une deuxième zone d'épaisseur accrue par rapport à ladite première zone, et
- au moins une ouverture, ménagée dans ladite partie de liaison, destinée à coopérer avec un moyen de maintien retenant ledit outil sur ladite machine.

Un tel outil est déjà connu de l'homme du métier. En effet, le document **EP 0 891 687** décrit un outil amovible comportant, entre autres, une partie de liaison susceptible de s'engager dans un logement d'une machine de travail du sol. Le maintien de cet outil connu dans son logement est assuré au moyen d'un élément de liaison traversant une ouverture ménagée dans ladite partie de liaison. La manipulation de cet élément de maintien étant très aisée, le remplacement de l'outil s'effectue donc très rapidement. De plus, la forme de cette partie de liaison présente une languette sensiblement plane et au moins un doigt sensiblement circulaire. Une telle géométrie permet avantageusement de répartir les pressions de contact entre l'outil et son logement. Il en résulte donc une diminution de l'usure par matage de la partie de liaison et/ou du logement.

Le but de la présente invention est de réaliser un outil offrant au moins les mêmes effets ou des effets similaires à ceux de l'outil connu.

A cet effet, l'outil de la présente invention est caractérisé en ce que ladite (au moins une desdites) deuxième(s) zone(s) présente, dans ladite section transversale, au moins sensiblement la forme d'un triangle disposé au moins partiellement dans le prolongement de ladite première zone.

D'autres caractéristiques de l'invention, à considérer séparément ou dans toutes leurs combinaisons possibles, apparaîtront encore dans la description suivante d'un exemple de réalisation non limitatif de l'invention représenté sur les dessins annexés sur lesquels :
- la **figure 1** représente une vue d'ensemble d'une herse rotative comportant des outils conformes à la présente invention,
- la **figure 2** représente, partiellement en coupe et vu suivant la flèche I définie sur la figure 1, un exemple de montage d'outils conformes à l'invention,
- la **figure 3** représente, vu suivant la flèche II définie sur la figure 2, un exemple de réalisation d'un rotor porte-outils pour un outil conforme à l'invention,
- la **figure 4** représente une vue latérale d'un outil de la figure 1,
- la **figure 5** représente, vu suivant la flèche III définie sur la figure 4, l'outil montré à la figure 4,
- la **figure 6** représente, vu suivant la flèche IV définie sur la figure 4, l'outil montré aux figures 4 et 5.

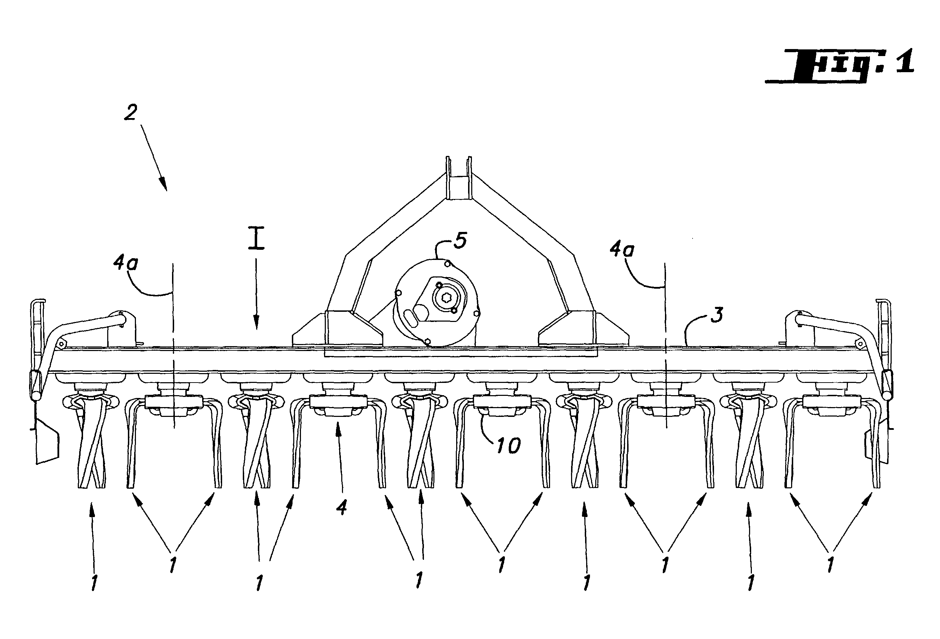

Dans l'exemple de réalisation représenté sur les figures, l'outil (1) de la présente invention est lié à une herse rotative (2). Pour ce faire ladite herse rotative (2) comporte, d'une manière connue de l'homme du métier, un bâti (3) supportant au moins un rotor porte-outils (4). Lors du travail, ledit rotor porte-outils (4) est entraîné en rotation autour d'un axe respectif (4a) au moins sensiblement vertical. A cet effet, ladite herse rotative (2) comporte en sus des éléments de transmission (5) permettant d'entraîner en rotation ledit rotor porte-outils (4), par exemple, à partir d'une prise de force d'un véhicule tracteur (non représenté). Ladite herse rotative (2) représentée sur la figure 1 comporte, à titre d'exemple, dix rotors porte-outils (4) disposés au moins sensiblement suivant une ligne perpendiculaire à une direction d'avance de ladite herse rotative (2). D'une manière connue de l'homme du métier, deux rotors porte-outils (4) consécutifs tournent suivant des sens de rotations opposés. Ladite herse rotative (2) étant connue en soi, elle ne sera donc pas décrite davantage.

D'une manière également connue de l'homme de l'art, ledit outil (1) comporte d'une part une partie active (6) destinée à travailler la terre et d'autre part une partie de liaison (7) destinée à positionner ledit outil (1) sur ladite herse rotative (2). Un plan d'extension de ladite partie active (6) est au moins sensiblement perpendiculaire à un plan d'extension (8) de ladite partie de liaison (7). La géométrie dudit outil (1) reprend donc globalement la forme d'un "L".

Ladite partie de liaison (7) est destinée à s'engager dans un logement (9) prévu dans ledit rotor porte-outils (4). Dans l'exemple de réalisation représenté sur les figures, un plan d'extension dudit logement (9) est au moins sensiblement horizontal. De manière préférentielle, ledit rotor porte-outils (4) comporte deux logements (9) disposés symétriquement de part et d'autre dudit axe de rotation (4a). Par conséquent, chaque rotor porte-outils (4) peut entraîner en rotation deux outils (1). Lors du travail, lesdites parties actives respectives (6) desdits outils (1) décrivent donc au moins sensiblement des cercles autour dudit axe de rotation (4a).

D'une manière connue de l'homme de métier, il est également prévu un moyen de maintien (10) permettant de retenir ledit outil (1) dans son logement respectif (9). Ledit moyen de maintien (10) est avantageusement de manipulation très aisée. Ainsi le temps nécessaire au remplacement dudit outil (1) peut être fortement réduit. Dans l'exemple de réalisation représenté sur les figures, ledit moyen de maintien (10) est destiné à coopérer avec une ouverture (11) ménagée dans ladite partie de liaison (7) d'un outil respectif (1). Plus précisément à la lumière de la figure 1, ledit moyen de maintien (10) est constitué d'une broche permettant avantageusement de retenir simultanément les deux outils (1) d'un même rotor porte-outils (4). Ledit moyen de maintien (10) étant connu en soi, il ne sera donc pas décrit davantage. Afin de ne pas surcharger la figure 1, les différents repères énumérés ci-dessus n'ont pas été reportés sur tous lesdits rotors porte-outils (4).

D'une manière particulièrement avantageuse, ladite partie de liaison (7) et ledit logement (9) présentent respectivement des formes permettant d'une part de faciliter l'engagement dudit outil (1) dans ledit rotor porte-outils (4), et d'autre part d'assurer une bonne répartition des pressions de contact. A cet effet, ladite partie de liaison (7) et ledit logement (9) ont au moins sensiblement des formes complémentaires. De plus ladite partie de liaison (7) comporte, vu suivant une coupe transversale perpendiculaire audit plan d'extension (8), une première zone (12) sensiblement rectangulaire et au moins une deuxième zone (13) d'épaisseur accrue par rapport à ladite première zone (12).

Selon une caractéristique importante de la présente invention, ladite (au moins une desdites) deuxième(s) zone(s) (13) présente, dans ladite section transversale, au moins sensiblement la forme d'un triangle (14) disposé au moins partiellement dans le prolongement de ladite première zone (12).

De manière préférentielle, ledit triangle (14) est disposé au moins sensiblement symétriquement de part et d'autre dudit plan d'extension (8). Deux faces (17, 18 ; 19, 20) dudit triangle (14) forment ainsi une pointe (15) orientée avantageusement vers l'extérieure dudit outil (1).

De manière préférentielle encore, ladite deuxième zone (13) est raccordée à ladite première zone (12). Afin d'accroître la résistance mécanique de ladite partie de liaison (7), la transition entre lesdites zones (12, 13) se fait progressivement. La largeur de la zone sensiblement rectangulaire (12) augmente donc de manière continue pour atteindre la largeur dudit triangle (14).

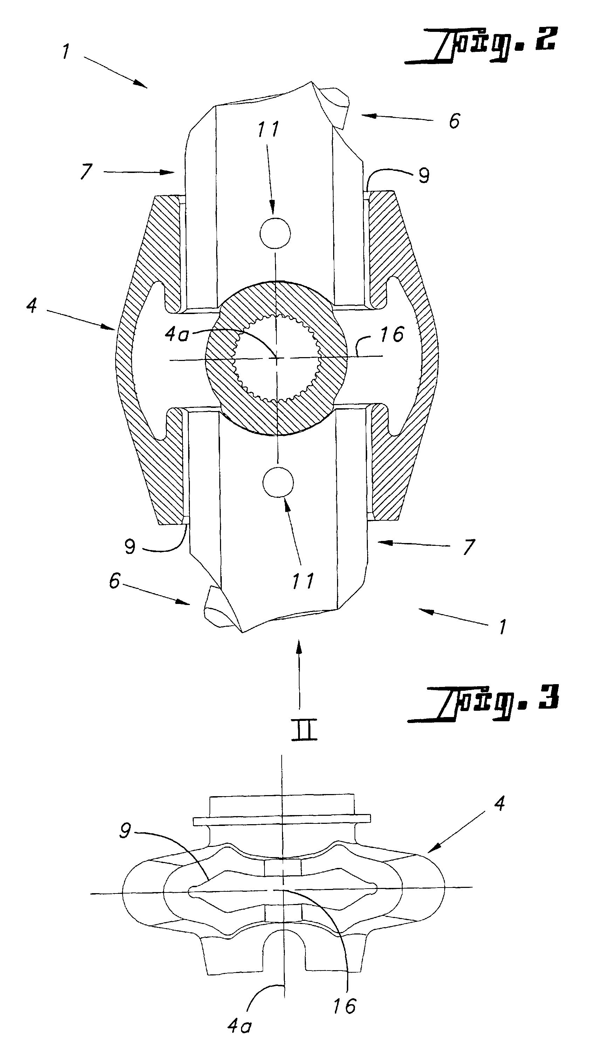

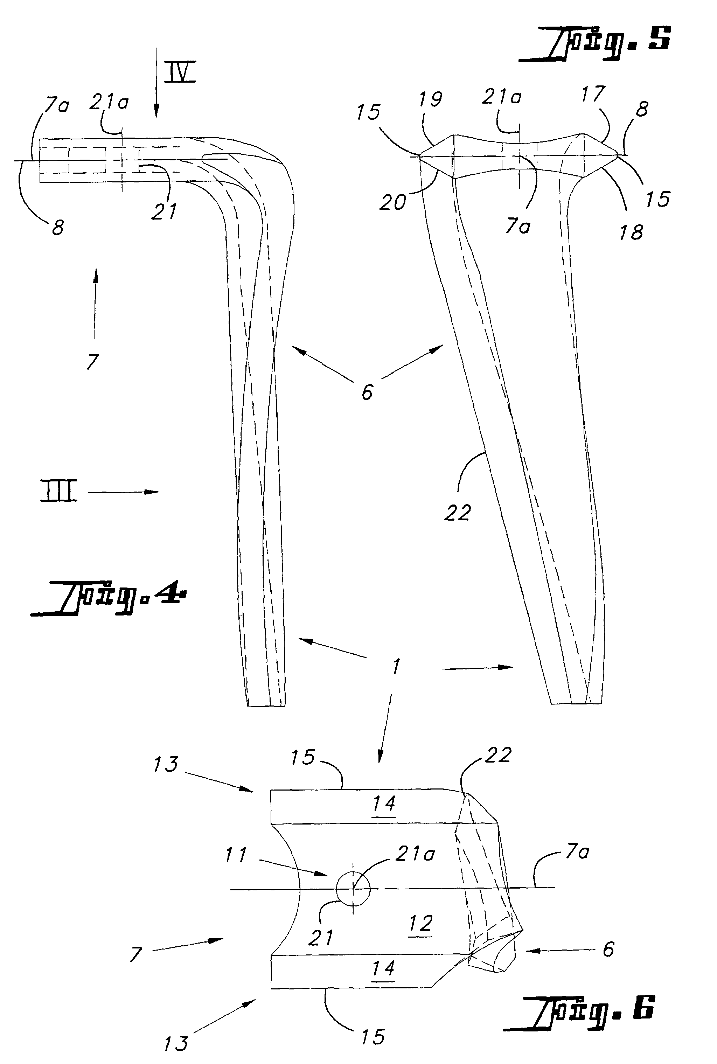

Dans l'exemple de réalisation représenté plus précisément sur les figures 4 à 6, ladite partie de liaison (7) comporte avantageusement deux deuxièmes zones (13) disposées de part et d'autre de ladite première zone (12). Ainsi, les deux faces (17, 18 ; 19, 20) d'un même triangle (14) forment un premier "V" respectif orienté suivant ledit plan d'extension (8). De plus, les faces (17, 19 ; 18, 20) desdits triangles (14) disposés d'un même coté dudit plan d'extension (8) forment un deuxième "V" respectif orienté perpendiculairement audit plan d'extension (8).

Lors du travail, ladite partie de liaison (7) est soumise à un premier type de sollicitation. En effet, le contact de la terre sur ladite partie active (6) et le mouvement de rotation dudit rotor porte-outils (4) ont tendance, entre autres, à faire pivoter ladite partie de liaison (7) par rapport audit logement (9) autour d'un axe parallèle audit axe de rotation (4a). Lesdits premiers "V" permettent une bonne répartition, entre ladite partie de liaison (7) et ledit logement (9), des pressions de contact engendrées par cette sollicitation.

Lors du travail, ladite partie de liaison (7) est également soumise à un deuxième type de sollicitation. Le contact de la terre sur ladite partie active (6) et le mouvement de rotation dudit rotor porte-outils (4) ont tendance, cette fois-ci, à faire pivoter ladite partie de liaison (7) par rapport audit logement (9) autour d'un axe longitudinal (7a) de ladite partie de liaison (7). Dans ce cas les faces (17, 20 ; 18, 19), situées dans des cotés différents dudit plan d'extension (8) et sur des triangles différents (14), sont mises à contribution.

Lors du travail, ladite partie de liaison (7) est finalement soumise à un troisième type de sollicitation. Le contact de la terre sur ladite partie active (6) et le mouvement d'avance de ladite herse rotative (2) ont tendance à faire pivoter ladite partie de liaison (7) par rapport audit logement (9) autour d'un axe (16) à la fois perpendiculaire audit axe de rotation (4a) et audit axe longitudinal (7a). Lesdits deuxièmes "V" jouent ici un rôle prépondérant dans la bonne répartition des pressions de contact.

Malgré le jeu nécessaire entre ladite partie de liaison (7) et ledit logement (9) pour faciliter l'engagement dudit outil (1) dans ledit rotor porte-outils (4), la mise en butée desdits "V" dans des formes complémentaires dudit logement (9) permet avantageusement de figer la position de ladite partie de liaison (7) dans ledit logement (9).

L'accroissement d'épaisseur desdites deuxièmes zones (13) permet d'augmenter la longueur desdites faces (17, 18, 19, 20) donc d'accroître avantageusement les surfaces de contact entre ladite partie de liaison (7) et ledit logement (9).

Pour sa part, ladite ouverture (11) est réalisée de manière préférentielle au moyen d'un trou (21) d'axe (21a), au moins sensiblement perpendiculaire audit plan d'extension (8), passant par ledit axe longitudinal (7a).

Dans l'exemple de réalisation représenté sur les figures, la forme de ladite partie de liaison (7) se prolonge au moins partiellement jusque dans ladite partie active (6). Plus précisément, une section transversale de ladite partie active (6) comporte l'une desdites deuxièmes zones (13) et au moins partiellement ladite première zone (12). De manière préférentielle, ladite deuxième zone prolongée (13) constitue une arête de travail (22) de ladite partie active (6). Ladite forme triangulaire de ladite deuxième zone (13) favorise la pénétration dudit outil (1) dans le sol. L'accroissement d'épaisseur de ladite deuxième zone (13) permet d'apporter un surplus de matière à l'arête de travail (22). La durée de vie de ladite partie active (6) s'en trouve donc augmentée. De manière préférentielle, ladite deuxième zone (13) est prolongée jusqu'à l'extrémité de ladite partie active (6).

Un tel outil (1) peut avantageusement être obtenu à partir d'un profilé présentant avantageusement la forme de ladite partie de liaison (7). Ainsi une simple découpe d'un tronçon dudit profilé permet d'obtenir, à peu de frais, l'ébauche d'un outil (1) de la présente invention. Une opération de pliage permet d'obtenir l'outil définitif (1).

D'une manière préférentielle, une découpe judicieuse dudit profilé permet d'obtenir simultanément l'ébauche de deux outils (1).

L'outil (1), représenté sur les figures 2 et 4 à 6, est destiné à être lié à un rotor porte-outils (4) tournant, vu de dessus, dans le sens anti-horaire. L'outil (1) de la présente invention, destiné à équiper un rotor porte-outils (4) tournant dans le sens horaire, est analogue à celui représenté. Ce dernier ne sera donc pas décrit.

L'outil (1) qui vient d'être décrit, n'est qu'un exemple de réalisation qui ne saurait en aucun cas limiter le domaine de protection défini par les revendications suivantes.

En effet d'une manière connue de l'homme de métier, l'outil (1) de la présente invention peut également être obtenu par forgeage. Ce procédé de fabrication permet d'accroître encore plus la résistance mécanique dudit outil (1).

## Revendications

1. Outil, pour machine de travail du sol, destiné à tourner autour d'un axe vertical et comportant :
- une partie active (6) destinée à travailler le sol,
- une partie de liaison (7), dont un plan d'extension (8) est sensiblement orthogonal à un plan d'extension de ladite partie active (6), destinée à positionner ledit outil (1) sur ladite machine (2) en s'engageant dans au moins un logement (9) prévu à cet effet,
- ladite partie de liaison (7) présentant suivant une section transversale une première zone (12) sensiblement rectangulaire et au moins une deuxième zone (13) d'épaisseur accrue par rapport à ladite première zone (12), et
- au moins une ouverture (11), ménagée dans ladite partie de liaison (7), destinée à coopérer avec un moyen de maintien (10) retenant ledit outil (1) sur ladite machine (2),
***caractérisé par le fait que*** ladite deuxieme zone ou au moins une desdites deuxièmes zones (13) présente, dans ladite section transversale, au moins sensiblement la forme d'un triangle (14) disposé au moins partiellement dans le prolongement de ladite première zone (12).

2. Outil selon la revendication 1, ***caractérisé par le fait que*** ledit triangle (14) est disposé de manière au moins sensiblement symétrique de part et d'autre dudit plan d'extension (8).

3. Outil selon la revendication 1 ou 2, ***caractérisé par le fait que*** deux faces (17, 18 ; 19, 20) dudit triangle (14) forment une pointe (15) orientée vers l'extérieure dudit outil (1).

4. Outil selon l'une quelconque des revendications 1 à 3, ***caractérisé par le fait que*** ladite deuxième zone ou au moins une desdites deuxièmes zones est raccordée à ladite première zone (12).

5. Outil selon la revendication 4, ***caractérisé par le fait que*** l'épaisseur de ladite première zone (12) augmente de manière progressive et continue pour atteindre l'épaisseur de ladite deuxième zone ou au moins une desdites deuxièmes zones (13).

6. Outil selon l'une quelconque des revendications 1 à 5, ***caractérisé par le fait que*** ladite partie de liaison (7) comporte deux deuxièmes zones (13).

7. Outil selon la revendication 6, ***caractérisé par le fait que*** lesdites deuxièmes zones (13) sont disposées de part et d'autre de ladite première zone (12).

8. Outil selon l'une quelconque des revendications 1 à 7, ***caractérisé par le fait que*** ladite deuxième zone ou au moins une desdites deuxièmes zones (13) se prolonge jusque dans ladite partie active (6).

9. Outil selon la revendication 8, ***caractérisé par le fait que*** ladite deuxième zone ou au moins une desdites deuxièmes zones (13) prolongée dans ladite partie active (6) forme une arête de travail (22).

10. Outil selon l'une quelconque des revendications 8 à 9, ***caractérisé par le fait que*** ladite deuxième zone ou au moins une desdites deuxièmes zones (13) se prolonge jusqu'à l'extrémité de ladite partie active (6).

11. Outil selon l'une quelconque des revendications 1 à 10, ***caractérisé par le fait que*** ledit outil (1) est obtenu par découpage d'un profilé présentant la section transversale de ladite partie de liaison (7).

## Patentansprüche

1. Werkzeug für eine Bodenbearbeitungsmaschine, das sich um eine vertikale Achse drehen soll und
- einen aktiven Teil (6), der den Boden bearbeiten soll,
- einen Verbindungsteil (7), dessen Erstreckungsebene (8) im Wesentlichen orthogonal zu einer Erstreckungsebene des aktiven Teils (6) verläuft und der das Werkzeug (1) an der Maschine (2) positionieren soll, indem er in mindestens eine dazu vorgesehene Aufnahme (9) eingreift,
- wobei der Verbindungsteil (7) entlang einem Querschnitt einen im Wesentlichen rechteckigen ersten Bereich (12) und mindestens einen zweiten Bereich (13) mit einer bezüglich des ersten Bereichs (12) größeren Dicke aufweist,
- wobei mindestens eine in dem Verbindungsteil (7) ausgebildete Öffnung (11), die mit einem Haltemittel (10) zusammenwirken soll, das Werkzeug ( 1 ) an der Maschine (2) festhält,
aufweist, ***dadurch gekennzeichnet,* dass** der zweite Bereich oder mindestens einer der zweiten Bereiche (13) in dem Querschnitt zumindest im Wesentlichen die Form eines Dreiecks (14) aufweist, das zumindest teilweise in der Verlängerung des ersten Bereichs (12) angeordnet ist.

2. Werkzeug nach Anspruch 1, ***dadurch gekennzeichnet,* dass** das Dreieck (14) auf beiden Seiten der Erstreckungsebene (8) zumindest im Wesentlichen symmetrisch angeordnet ist.

3. Werkzeug nach Anspruch 1 oder 2, ***dadurch gekennzeichnet,* dass** zwei Seiten (17, 18; 19, 20) des Dreiecks (14) eine nach außen des Werkzeugs (1) ausgerichtete Spitze (15) bilden.

4. Werkzeug nach irgend einem der Ansprüche 1 bis 3, ***dadurch gekennzeichnet*, dass** der zweite Bereich oder zumindest einer der zweiten Bereiche mit dem ersten Bereich (12) verbunden ist.

5. Werkzeug nach Anspruch 4, ***dadurch gekennzeichnet,* dass** die Dicke des ersten Bereichs (12) allmählich und kontinuierlich zunimmt, um die Dicke des zweiten Bereichs oder mindestens eines der zweiten Bereiche (13) zu erreichen.

6. Werkzeug nach irgend einem der Ansprüche 1 bis 5, ***dadurch gekennzeichnet,* dass** der Verbindungsteil (7) zwei zweite Bereiche (13) aufweist.

7. Werkzeug nach Anspruch 6, ***dadurch gekennzeichnet,* dass** die zweiten Bereiche (13) auf beiden Seiten des ersten Bereichs (12) angeordnet sind.

8. Werkzeug nach irgend einem der Ansprüche 1 bis 7, ***dadurch gekennzeichnet*, dass** der zweite Bereich oder mindestens einer der zweiten Bereiche (13) bis in den aktiven Teil (6) verlängert ist.

9. Werkzeug nach Anspruch 8, ***dadurch gekennzeichnet,* dass** der zweite Bereich oder zumindest einer der zweiten Bereiche (13), der in den aktiven Teil (6) verlängert ist, eine Arbeitskante (22) bildet.

10. Werkzeug nach irgend einem der Ansprüche 8 bis 9, ***dadurch gekennzeichnet,* dass** der zweite Bereich oder zumindest einer der zweiten Bereiche (13) bis zum Ende des aktiven Teils (6) verlängert ist.

11. Werkzeug nach irgend einem der Ansprüche 1 bis 10, ***dadurch gekennzeichnet,* dass** das Werkzeug (1) durch Schneiden eines Profils erhalten wird, das den Querschnitt des Verbindungsteils (7) aufweist.

## Claims

1. Tool, for soil-working machine, intended to rotate about a vertical axis and comprising:
- an active portion (6) intended to work the soil,
- a link portion (7), whose extension plane (8) is substantially orthogonal to an extension plane of the said active portion (6), intended to position the said tool (1) on the said machine (2) by engaging in at least one housing (9) provided for this purpose,
- the said link portion (7) having along a transverse section a first substantially rectangular zone (12) and at least a second zone (13) thicker than the said first zone (12), and
- at least one opening (11), made in the said link portion (7) intended to interact with a holding means (10) retaining the said tool (1) on the said machine (2),
***characterized in* that** the said second zone or at least one of the said second zones (13) has, in the said transverse section, at least substantially the shape of a triangle (14) arranged at least partially in the extension of the said first zone (12).

2. Tool according to Claim 1, ***characterized in* that** the said triangle (14) is arranged at least substantially symmetrically on either side of the said extension plane (8).

3. Tool according to Claim 1 or **2, *characterized in* that** two faces (17, 18; 19, 20) of the said triangle (14) form a point (15) oriented towards the outside of the said tool (1).

4. Tool according to any one of Claims 1 to 3, ***characterized in* that** the said second zone or at least one of the said second zones is connected to the said first zone (12).

5. Tool according to Claim 4, ***characterized in* that** the thickness of the said first zone (12) increases progressively and continuously to reach the thickness of the said second zone or at least one of the said second zones (13).

6. Tool according to any one of Claims 1 to 5, ***characterized in* that** the said link portion (7) comprises two second zones (13).

7. Tool according to Claim 6, ***characterized in* that** the said second zones (13) are arranged on either side of the said first zone (12).

8. Tool according to any one of Claims 1 to 7, ***characterized in* that** the said second zone or at least one of the said second zones (13) extends as far as the said active portion (6).

9. Tool according to Claim 8, ***characterized in* that** the said second zone or at least one of the said second zones (13) extended into the said active portion (6) forms a working edge (22).

10. Tool according to either one of Claims 8 and 9, ***characterized in* that** the said second zone or at least one of the said second zones (13) extends as far as the end of the said active portion (6).

11. Tool according to any one of Claims 1 to 10, ***characterized in* that** the said tool (1) is obtained by cutting out a section having the cross section of the said link portion (7).
